# FASCICULE DE BREVET EUROPEEN

(11) **EP 0 693 312 B1**
(45) Date de publication et mention de la délivrance du brevet: **30.12.1998**
(21) Numéro de dépôt: 95401698.6
(22) Date de dépôt: 18.07.1995
(51) Int. Cl.: B01J 8/12, C10G 35/12

(54) **Perfectionnement aux enceintes en lit mobile**
Verbesserung an Wanderbettkammer
Improvement in moving bed enclosures

(30) Priorité: 22.07.1994 FR 9409207
(43) Date de publication de la demande: 24.01.1996
(73) Titulaire: INSTITUT FRANCAIS DU PETROLE, 92502 Rueil-Malmaison (FR)
(72) Inventeur: Euzen, Jean-Paul, F-69570 Dardilly (FR); Berthelin, Maurice, F-69360 Saint Symphorien (FR); Huin, Roland, F-78360 Montesson la Borde (FR); Vuillemot, Daniel, F-69230 Saint Genis Laval (FR); De Bonneville, Jean, F-78380 Bougival (FR)

(56) Documents cités:
- EP-A- 0 264 669
- US-A- 4 498 973
- PATENT ABSTRACTS OF JAPAN vol. 17, no. 638 (C-1133) 26 Novembre 1993 & JP-A-05 200 272 (MITSUI MINING CO LTD) 10 Août 1993

## Description

L'invention concerne un perfectionnement aux enceintes dans lesquelles s'écoule un lit de particules solides, dit lit mobile. Elle s'applique particulièrement aux réacteurs en lit mobile et notamment aux réacteurs catalytiques en lit mobile, tels que ceux utilisés pour le réformage catalytique, dans lesquels circulent des particules granulaires solides (de catalyseur) de même nature (un seul catalyseur).

Dans les unités en lit mobile dans lesquelles la circulation du solide, catalytique ou non, de forme sphérique ou non, est réalisée en lit dense s'écoulant verticalement sous l'effet de la pesanteur, les parois qui limitent la zone granulaire comportent le plus souvent 2 grilles cylindriques de diamètre différent. Le fluide, en phase liquide ou plus souvent gazeuse, ou éventuellement les fluides (gaz et liquide, ou liquide et autre liquide non miscible) traverse le lit granulaire (et dans ce cas annulaire) en écoulement croisé, c'est à dire en écoulement radial, de l'extérieur vers l'intérieur, ou inversement de l'intérieur vers l'extérieur. Après avoir traversé la grille cylindrique d'entrée, le fluide traverse donc le lit, puis sort de l'espace annulaire contenant le milieu granulaire en passant à travers une seconde grille, la grille de sortie, concentrique à la grille d'entrée.

Dans une forme de réalisation décrite dans le brevet US-A-4 498 973, l'espace entre les parois limitant la zone granulaire est subdivisé en plusieurs zones distinctes dans lesquelles circulent des particules de différents catalyseurs devant être régénérés simultanément sans être mélangées.

L'écoulement du (ou des) fluide (s) à travers le lit provoque une perte de charge qui dépend de plusieurs facteurs dont les principaux sont la taille et la forme des particules, les propriétés du ou des fluides et le débit (du ou des) fluide(s). Cette perte de charge se traduit par une poussée du fluide sur les particules solides dans le sens de l'écoulement du fluide. Cette poussée qui s'exerce vers la grille de sortie du fluide modifie l'ensemble du bilan des forces auxquelles sont soumises les particules solides (billes par exemple). Ce phénomène est de nature à entraîner des inconvénients, comme le ralentissement du mouvement des particules qui sont contre la paroi, ou même leur blocage contre ladite grille de sortie et leur arrêt complet, ce qui d'une part nuit gravement à la bonne utilisation systématique de ces particules, mais peut aussi d'autre part provoquer le ralentissement ou même l'arrêt d'autres particules, voire, de proche en proche le blocage complet du lit (par exemple catalytique) et l'arrêt complet de la circulation du solide. Ce phénomène est d'autant plus accentué que la poussée du ou des fluides est forte, et donc que la capacité de l'unité est élevée.
Ce phénomène de blocage constitue donc une limitation importante à l'augmentation de capacité des unités. Il est donc particulièrement intéressant de mettre en place les dispositions et dispositifs qui diminuent l'amplitude de ce phénomène.

Ce problème se pose avec acuité dans les unités catalytiques, telle que le réformage catalytique. Le risque de blocage des particules catalytiques sur les grilles conduit à diminuer alors fortement les débits de gaz à traiter donc les capacités des unités.

De plus, au cours des différents traitements, comme en particulier la régénération des particules catalytiques, ou les transferts entre les réacteurs ou entre les réacteurs et les régénérateurs, il se forme des fragments de bille qui se bloquent très vite sur les grilles. Cette population fragmentée accélère le phénomène de blocage.

L'objectif de l'invention est de diminuer les risques de blocage des particules, donc de diminuer la force de frottement contre cette grille et en particulier la poussée, exercée par la phase fluide sur le milieu granulaire et plus précisément sur les particules qui sont en contact avec la grille de sortie.

L'invention a également pour but d'augmenter les capacités des réacteurs actuels en lit mobile, et en particulier des réacteurs de réformage catalytique.
L'invention s'applique particulièrement bien au cas des particules solides de diamètre moyen compris entre 0,1 et 6 mm, et de préférence entre 1,5 et 3,5 mm, voire entre 1,5 et 3,2 mm.

Plus précisément, l'invention a pour objet une enceinte délimitée par au moins une paroi, comportant
. au moins une ouverture pour l'introduction de particules granulaires solides,
. au moins une grille délimitant un lit mobile desdites particules qui circule dans l'enceinte dans une direction sensiblement parallèle à ladite grille ;
. au moins une ouverture pour l'introduction d'au moins un fluide qui circule dans ledit lit dans une direction différente de celle de l'ensemble des particules, et sort du lit par au moins une grille ;
. au moins une ouverture pour la sortie du fluide de l'enceinte,
. au moins une ouverture pour la sortie des particules de l'enceinte, ladite enceinte comportant également
. au moins une paroi dite intermédiaire située dans le lit de particules, perméable au fluide mais non perméable aux particules granulaires solides et disposée sensiblement dans le sens de l'écoulement des particules, situé entre 0,1e et 0,75e, e étant l'épaisseur complète du lit, à partir de la grille par laquelle sort le fluide, de façon à ce que le débit maximum de blocage des particules contre les parois soit identique pour chacune des zones séparées, ladite paroi intermédiaire présentant un coefficient de frottement avec les particules compris entre 0,1 et 0,7, et la partie supérieure de cette paroi intermédiaire s'arrétant avant la zone de distribution du solide et n'offrant pas d'obstacle à la répartition régulière des particules solides entre les deux zones situées de part et d'autre de cette paroi.

Par enceinte, on comprend un réacteur, un silo... ou plus généralement une zone délimitée par au moins une paroi. Le cas le plus courant est un réacteur (tel que pour le réformage catalytique ou autre réaction chimique) à axe vertical comportant une paroi cylindrique, un fond et un toit.

D'autres formes de réacteur peuvent convenir tel que celui décrit dans le brevet US-A-5,013,426 comportant une suite de compartiments parallèles contenant un lit catalytique.

Un lit mobile de particules solides est formé dans l'enceinte, l'apport des particules est réalisé au moyen d'au moins une ouverture, et leur sortie par au moins une ouverture.

Dans l'enceinte, le lit de particules peut être délimité généralement
. par une grille et une paroi. C'est le cas par exemple lorsque la grille est cylindrique et le lit circule entre la paroi cylindrique du réacteur et la grille ;
. par au moins deux grilles dites extérieure et intérieure. De préférence, les grilles sont parallèles 2 à 2 ou concentriques. C'est le cas par exemple de 2 grilles cylindriques disposées concentriquement selon l'axe du réacteur, le lit circulant entre ces grilles.

L'écoulement de l'ensemble des particules s'effectue globalement le long d'au moins une grille, c'est-à-dire que la direction de cet écoulement est sensiblement parallèle à ladite grille. Le but en est bien évidemment de limiter le frottement des particules sur la grille, donc leur blocage.
Le terme "sensiblement parallèle" a été utilisé pour rendre compte de la difficulté de contrôler une direction strictement parallèle de cet écoulement mais globalement, le mouvement d'ensemble est parallèle à l'axe de l'enceinte.

Il est introduit dans l'enceinte au moins un fluide qui traverse le lit mobile et en sort par la ou les grilles (dite grille de sortie). L'invention s'applique avantageusement dans le cas où le fluide (les fluides) circule dans le lit de particules avec une direction différente de celle de l'ensemble des particules. En d'autres termes, la poussée provoquée par le fluide est de nature à contrarier le mouvement recherché pour le lit mobile.

C'est le cas fréquent des écoulements radiaux de fluide. Le changement dans la direction d'écoulement de certaines particules, provoqué par le fluide, amène ces particules sur la (les) grille(s) où elles peuvent se bloquer.

Le perfectionnement selon l'invention consiste à placer dans le lit mobile de particules situé dans l'enceinte, au moins une paroi dite intermédiaire.

Cette paroi est perméable au fluide mais elle supporte la poussée des particules solides. Le passage de ces particules à travers la paroi ne peut se faire. C'est dans le cas général une grille dont les trous ou les fentes sont calibrés en fonction de la granulométrie des particules solides du lit, mais ce pourrait aussi bien être une paroi telle qu'une membrane rigide.
Il est bien évident que des fragments de particules solides peuvent traverser cette grille intermédiaire (fines par exemple). Mais cet effet est limité.
Cette paroi intermédiaire définit deux zones dans le lit.

La position de cette paroi intermédiaire, ou les positions de ces parois s'il y en a plusieurs, doit être choisie pour répartir les différentes poussées provoquées par le fluide sur les particules des différentes zones de manière régulière et sensiblement égale pour que le débit maximum correspondant au blocage soit le même pour chacune des zones ainsi séparées. L'espace pourrait ainsi être divisé, dans le cas d'une seule paroi intermédiaire, selon les critères, à une position située entre 0,1e et 0,75e, de préférence inférieure à 0,5e et encore de préférence entre 1/3e et 2/3e, e étant l'épaisseur complète du lit, à partir de la grille de sortie du fluide (ou bien respectivement entre 2/3 et 1/3 à partir de la grille d'entrée si elle existe).

Le débit maximum de blocage entre 2 parois d'un lit de particules est mesuré par exemple dans une enceinte parallélépipédique dans laquelle s'écoule le lit de particules solides. Un débit transversal d'air (ou un autre gaz) est introduit dans le lit par un côté grillagé de l'enceinte et ressort par le côté grillagé en face. On fait varier le débit de gaz (air) et on observe le mouvement des particules tout en mesurant la perte de charge.

Au moment où le blocage des particules est observés, on note la perte de charge qui donne donc accès au débit maximum de blocage dans les conditions de l'expérience.

De préférence, cette paroi intermédiaire est parallèle à au moins une grille, et de préférence parallèle à la grille par laquelle sort ou entre le fluide (dite grille d'entrée) lorsqu'elle existe.

La hauteur de la paroi intermédiaire (des parois) est de préférence sensiblement équivalente à celle de la(des) grille(s) pour s'interposer sur les trajets principaux du fluide.
Cette paroi peut être de même nature que les autres grilles, et doit bien entendu être maintenue en position et en résistance selon les moyens connus de l'homme de l'art.

La paroi intermédiaire doit présenter un coefficient de frottement avec les particules compris entre 0,1 et 0,7 et de préférence 0,3 et 0,5, pour que diminue le risque de blocage.
La partie supérieure de cette ou de ces grilles (ou parois) intermédiaires s'arrête avant la zone de distribution du solide et n'offre pas d'obstacle à la répartition régulière des particules solides entre les deux zones situées de part et d'autre de cette paroi. De même la partie inférieure peut être interrompue avant le contact avec le fond du réacteur de manière à laisser les particules solides s'écouler sans difficulté par l' (les) ouverture(s) prévue(s) à cet effet. Mais cette paroi peut aussi aller du haut en bas, ou jusqu'en bas, ou jusqu'en haut, de l'espace réservé au solide, si l'on préfère alimenter ou/et soutirer le solide indépendamment pour chacune des zones. Des communications ou ouvertures partielles en haut ou en bas peuvent également être utilisées dans la mesure ou elles ne contrarient pas la répartition ou le soutirage régulier des particules solides.

Lorsqu'il y a plusieurs parois intermédiaires, l'espace entre les parois est, de préférence, au moins égal à 30 fois le diamètre moyen des particules.

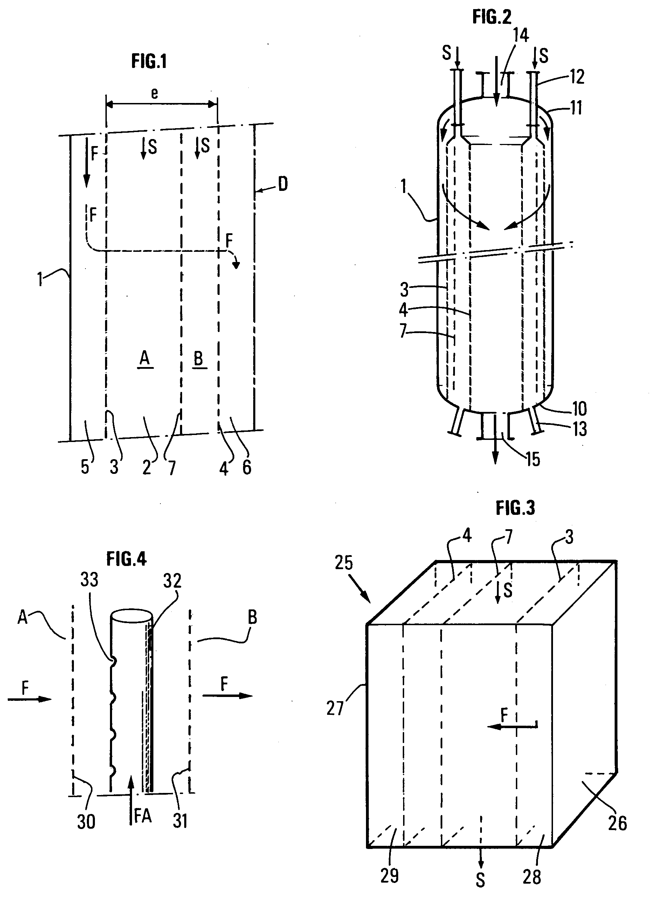

L'explication de l'effet de la paroi intermédiaire sera mieux comprise à partir du schéma proposé figure 1 à titre illustratif et non limitatif.

Il s'agit d'une coupe longitudinale d'une moitié du lit mobile dans un réacteur cylindrique d'axe (D) avec une paroi 1. Le lit mobile 2 des particules solides est délimité par deux grilles 3 (grille d'entrée du fluide) et 4 (grille de sortie du fluide).
Le fluide F est amené dans la zone annulaire 5 délimitée par la grille 3 et la paroi 1. Il est collecté dans la zone 6 annulaire délimitée par la grille 4 (ici cylindrique).
La circulation du fluide est matérialisée sur la figure. Le solide s'écoule globalement dans une direction parallèle à l'axe du réacteur.

Une seule grille intermédiaire 7 est ici placée, elle découpe la zone annulaire du lit en deux zones :
Dans la première zone A, repérée par rapport au sens de circulation du fluide, la poussée exercée, par le fluide qui entre dans le réacteur, sur les particules de la première zone est encaissée par la face amont de la grille intermédiaire, mais elle n'est pas transmise aux particules situées en aval. Cette poussée est donc limitée à une partie seulement du lit granulaire.
Dans la deuxième zone B, par rapport au sens de la circulation du fluide, les premières particules rencontrées par le fluide ne subissent donc maintenant aucune force de la part des particules qui sont dans la zone A amont, contrairement à ce qui se serait passé en absence de la grille intermédiaire. Quant aux particules rencontrées à la fin du trajet du fluide dans cette deuxième zone elles ne subissent que les forces relatives à une épaisseur réduite de lit, et donc une force transversale réduite, bien inférieure à celle qui se serait exercée si la grille intermédiaire n'avait pas été placée.

Dans chacune des zones, les particules les plus fortement soumises aux efforts de poussée exercés non seulement par le fluide, mais aussi par les particules voisines, sont celles en contact avec les grilles de sortie du ou des fluides.
Grâce au dispositif proposé, ces forces sont réduites à iso-capacité, aussi bien au contact de la grille intermédiaire que de la grille de sortie conventionnelle. Il en résulte qu'inversement les limites de blocage sont atteintes pour un débit de fluide supérieur et que par conséquent
. d'une part les capacités des unités existantes peuvent être augmentées, sans risque de blocage et que
. d'autre part les unités à construire peuvent bénéficier de cette amélioration qui se traduira pour des capacités données par des réacteurs plus compacts, une accessibilité meilleure, une souplesse et une flexibilité de fonctionnement améliorées.

Il est bien évident que le nombre des parois intermédiaires sera choisi en fonction de la géométrie de l'enceinte, de l'épaisseur du lit, des particules solides et des débits de fluide principal.

Cette paroi intermédiaire doit présenter sur chacune de ses faces les mêmes caractéristiques que les parois employées traditionnellement pour limiter l'espace réservé au milieu granulaire. Outre leur état de surface particulièrement favorable au glissement des particules, elles doivent être infranchissables par les particules solides, mais suffisamment ouvertes pour faciliter l'écoulement du fluide de manière bien répartie.

De façon particulièrement avantageuse, cette ou ces parois intermédiaires (grilles) peuvent aussi servir à modifier de manière contrôlée les conditions opératoires dans leréacteur : il est ainsi possible de les utiliser pour répartir régulièrement un fluide d'appoint.

Dans ce but, la paroi intermédiaire (ou la grille) comprend 2 faces parallèles séparées par un espace dans lequel est amené, par des moyens d'introduction, un fluide dit d'appoint.

Ce dispositif est ici appelé "à double face". L'espace entre les faces est donné par le calcul mécanique, il est supérieur à 0,2 cm en général. Ce fluide est de préférence identique au fluide principal introduit dans l'enceinte, ou au fluide traité sortant de l'enceinte mais peut aussi être un des réactifs qu'il est alors possible d'introduire de manière progressive et contrôlée au sein du réacteur pour faciliter la réaction, soit par l'intermédiaire des concentrations ou des pressions partielles, soit par celui des températures.

Tout moyen d'introduction du fluide d'appoint peut convenir ; c'est par exemple une tubulure diffusant sur toute la longueur de la grille.

L'intérêt de ce dispositif est de pouvoir injecter le fluide d'appoint, à faible débit, à co-ou à contre-courant du fluide principal. Les ouvertures d'injection du fluide d'appoint seront disposées en conséquence, et le débit calculé selon les règles de l'homme du métier. De préférence, ce débit sera au plus égal à 1/2 du débit du fluide principal.

Un autre intérêt est de pouvoir mélanger localement le fluide d'appoint avec le fluide principal. Un brassage des divers filets de fluide principal qui ont déjà traversé la première zone du réacteur peut également être favorisé par cette disposition.
Il est également possible d'utiliser ce dispositif "à double face" en tant qu'échangeur de chaleur, avec le ou les fluides, immergé dans le réacteur sans que la circulation du milieu granulaire ou du fluide soit pour autant perturbée.
Il est alors disposé dans l'espace entre les faces, un tube par exemple ou une plaque etc...dans lequel circule un fluide caloporteur.

Il est encore possible d'utiliser ce dispositif "à double face" pour disposer toute une série de capteurs permettant une meilleure connaissance un meilleur contrôle de l'état du fluide ou du mouvement des particules.

La présente invention et son mode de réalisation avantageux à double face sont illustrés dans les figures ci-après décrites (la figure 1 ayant été appliquée précédemment) :
- figure 2 : mode de réalisation en réacteur cylindrique avec 2 grilles ; on a ici représenté un réacteur à lit mobile typique du réformage catalytique, à titre illustratif mais non limitatif ;
- figure 3: mode de réalisation en compartiment parallélépipédique avec 2 grilles,
- figure 4 : mode de réalisation d'une grille à double face.
- figure 5 : mode de réalisation avec cloisons.

Selon la figure 2, le réacteur comporte une paroi 1 cylindrique, un fond 10, un toit 11, une grille extérieure 3 cylindrique selon l'axe du réacteur et une grille intérieure 4 cylindrique, concentrique à la grille 3 mais de plus petit diamètre.

Par au moins une ouverture 12 dans le toit sont introduites les particules solides S qui sortent du fond de l'enceinte par au moins une ouverture 13, le lit mobile des particules circulant entre les 2 grilles.
Par au moins une ouverture 14 dans la partie haute du réacteur, est introduit le fluide F qui traverse le lit, est collecté dans le volume interne délimité par la grille 4 et sort du réacteur par au moins une ouverture 15 de la partie basse du réacteur. Le fluide traverse le lit dans un sens différent de l'écoulement de l'ensemble des particules.

La grille intermédiaire 7 cylindrique, concentrique aux grilles 3 et 4, est disposée sur toute la hauteur du lit et avantageusement à plus de 1/3 de l'épaisseur à partir de la grille d'entrée 3 du fluide.

Dans cette figure, l' (les) ouverture(s) pour l'introduction et la sortie du fluide sont disposées pour faire circuler le fluide de l'espace annulaire délimité par la paroi de l'enceinte et la grille extérieure de plus grand diamètre vers le volume interne délimité par la grille de plus petit diamètre, d'où il sort. Une circulation du fluide en sens contraire peut aussi convenir.

De façon particulièrement avantageuse, pour améliorer la résistance mécanique du lit, le lit de particules peut être découpé en secteurs par une ou des parois (cloisons) pleines ou grilles, en particulier de type "à double face".
Ces parois (cloisons) continues sont fixées aux grilles intérieure, extérieure et intermédiaire, et participent ainsi à la résistance mécanique de l'ensemble. Elles sont disposés parallèlement à l'écoulement du solide et elles ne s'opposent pas à l'écoulement du fluide principal. Par exemple, elles sont agencées radialement dans une enceinte cylindrique.
Il est bien évident que ces parois (cloisons) doivent comporter les caractéristiques de surface nécessaires pour que les particules solides puissent glisser.
Par ailleurs, chaque secteur peut être alimenté indépendamment des autres secteurs, si besoin.
Ces parois (cloisons) pourront être choisies étanches aux fluide(s) et solides ou encore non perméable au solide mais perméable au(x) fluides(s).

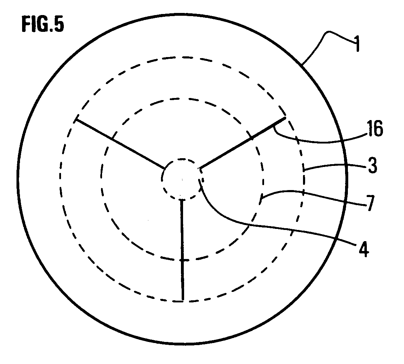

La figure 5 représente sur une vue de dessus incomplète d'un réacteur cylindrique (tel que celui de la figure 2) des cloisons 16.
Sur la figure 3 est représenté une coupe d'un compartiment dit parallépipédique 25 avec ses parois 26 et 27, comportant 2 grilles planes parallèles 3 et 4 entre lesquelles circule le lit mobile S, selon une direction ici verticale ; le fluide F amené perpendiculairement à S dans l'espace 28 délimité par la paroi 26 et la grille 3 traverse le lit S et est collecté dans l'espace 29 entre la paroi 27 et la grille 4, d'où il sort.
On peut ainsi concevoir un réacteur à virole cylindrique ou parallélépipédique comprenant un ou plusieurs compartiments parallélépipédiques.

Plus généralement , on illustre dans la figure 3 une enceinte constituée d'un réacteur comportant au moins un compartiment parallélépipèdique comportant deux parois, deux grilles planes parallèles situées entre ces deux parois délimitant un lit mobile de particules solides, et un espace entre chaque paroi et grille, l'un pour amener le fluide dans le compartiment, l'autre pour sa sortie, enceinte dans laquelle au moins un compartiment parallélépipèdique comporte au moins une paroi intermédiaire disposée dans le lit mobile, parallèlement aux autres grilles.

De même que précédemment, au moins une paroi (cloison) délimitant des secteurs dans le lit peut être placée, selon une direction sensiblement parallèle au sens de l'écoulement du fluide et sensiblement parallèle au sens de l'écoulement de l'ensemble des particules.

La figure 4 montre une réalisation dite "à double face". Deux grilles séparées 30 et 31 (ou parois) constituent les faces amont et aval respectivement de la grille intermédiaire. Elles permettent dans ce cas particulier le passage du fluide principal de la zone A vers la zone B, mais pas celui des particules solides.
Dans l'espace entre les 2 grilles est disposé un moyen d'introduction du fluide d'appoint FA, constitué ici par un diffuseur 32 qui est par exemple un tube percé d'orifices 33. Ceux-ci sont avantageusement disposés en vis à vis de la face amont, de façon à injecteur le fluide d'appoint à contre-courant du fluide principal.

L'invention concerne donc également l'utilisation d'une enceinte pour le reformage catalytique en lit mobile, enceinte délimitée par au moins une paroi (1), comportant :
. au moins une ouverture (12) pour l'introduction de particules granulaires solides, de même nature, ayant un diamètre moyen compris entre 0,1 et 6 mm,
. au moins une grille (3, 4) délimitant un lit mobile desdites particules qui circule dans l'enceinte dans une direction sensiblement parallèle à ladite grille;
. au moins une ouverture (14) pour l'introduction d'au moins un fluide qui circule dans ledit lit de particules dans une direction différente de celle de l'ensemble des particules et sort dudit lit par au moins une grille (4),
. au moins une ouverture (15) pour la sortie dudit fluide de l'enceinte,
. au moins une ouverture (13) pour la sortie dudit fluide de l'enceinte,
. au moins une paroi (7) dite intermédiaire située dans le lit de particules, ladite paroi étant perméable au fluide mais non perméable aux particules granulaires solides, et disposée sensiblement dans le sens de l'écoulement des particules, la (les) paroi(s) intermédiaire(s) est située entre 0,1 et 0,75e, e étant l'épaisseur complète du lit, à partir de la grille par laquelle sort le fluide, ladite position étant calculée de façon à ce que le débit maximum de blocage, des particules contre les parois soit identique pour chacune des zones séparées, ladite paroi intermédiaire présentant un coefficient de frottement avec les particules comprises entre 0,1 et 0,7.

## Revendications

1. Enceinte délimitée par au moins une paroi (1), comportant
. au moins une ouverture (12) pour l'introduction de particules granulaires solides, de même nature, ayant un diamètre moyen compris entre 0,1 et 6 mm,
. au moins une grille (3,4) délimitant un lit mobile desdites particules qui circule dans l'enceinte dans une direction sensiblement parallèle à ladite grille ;
. au moins une ouverture (14) pour l'introduction d'au moins un fluide qui circule dans ledit lit de particules dans une direction différente de celle de l'ensemble des particules et sort dudit lit par au moins une grille (4),
. au moins une ouverture (15) pour la sortie dudit fluide de l'enceinte,
. au moins une ouverture (13) pour la sortie desdites particules de l'enceinte,
caractérisée en ce qu'elle comporte également au moins une paroi (7) dite intermédiaire située dans le lit de particules, ladite paroi étant perméable au fluide mais non perméable aux particules granulaires solides, et disposée sensiblement dans le sens de l'écoulement des particules,situé entre 0,1e et 0,75e, e étant l'épaisseur complète du lit, à partir de la grille par laquelle sort le fluide, de façon à ce que le débit maximum de blocage, des particules contre les parois soit identique pour chacune des zones séparées, ladite paroi intermédiaire présentant un coefficient de frottement avec les particules comprises entre 0,1 et 0,7, et la partie supérieure de cette paroi intermédiaire s'arrêtant avant la zone de distribution du solide et n'offrant pas d'obstacle à la répartition régulière des particules solides entre les deux zones situées de part et d'autre de cette paroi.

2. Enceinte selon la revendication 1, caractérisée en ce que le lit circule dans le volume délimité par une grille et une paroi de l'enceinte.

3. Enceinte selon la revendication 1, caractérisée en ce que le lit circule dans le volume délimité entre au moins deux grilles (3,4).

4. Enceinte selon l'une des revendications précédentes, caractérisée en ce que la (les) paroi intermédiaire (7) est constituée par une grille.

5. Enceinte selon l'une des revendications précédentes, caractérisée en ce que la (les) paroi intermédiaire (7) est située entre 1/3 et 2/3 de l'épaisseur complète du lit, à partir de la grille (4) par laquelle sort le fluide.

6. Enceinte selon l'une des revendications précédentes, caractérisée en ce que la (les) paroi intermédiaire (7) est parallèle à au moins une grille.

7. Enceinte selon l'une des revendications précédentes, constituée d'un réacteur cylindrique avec une paroi cylindrique (1), un fond (10) et un toit (11), deux grilles (3,4) concentriques selon l'axe du réacteur et délimitant dans le réacteur un lit mobile de particules solides, au moins une ouverture (12) dans le toit pour introduire les particules solides et au moins une ouverture (13) dans le fond pour leur sortie, au moins une ouverture (14) en partie haute du réacteur pour l'introduction du fluide et au moins une ouverture (15) en partie basse pour sa sortie, le fluide traversant le lit mobile dans un sens différent de l'écoulement de l'ensemble des particules, enceinte caractérisée en ce qu'elle comporte également au moins une grille intermédiaire (7) disposée dans le lit mobile, concentriquement avec les autres grilles.

8. Enceinte selon la revendication 7, caractérisée en ce que l'(les) ouverture(s) pour l'introduction et la sortie du fluide est (sont) disposée(s) pour faire circuler le fluide de l'espace annulaire délimité par la paroi (1) de l'enceinte et la grille extérieure (3) de plus grand diamètre vers le volume interne délimité par la grille (4) de plus petit diamètre, d'où il sort.

9. Enceinte selon la revendication 8, caractérisée en ce que l'(les) ouverture(s) pour l'introduction et la sortie du fluide sont disposées pour faire circuler le fluide du volume interne délimité par la grille (4) de plus petit diamètre vers l'espace annulaire délimité par la paroi (1) de l'enceinte et la grille extérieure (3) de plus grand diamètre.

10. Enceinte selon l'une des revendications précédentes, constituée d'un réacteur comportant au moins un compartiment parallépipèdique (25) comportant deux parois (26,27), deux grilles planes (3,4) parallèles situées entre ces deux parois délimitant un lit mobile de particules solides, et un espace entre chaque paroi et grille l'un pour amener le fluide dans le compartiment, l'autre pour sa sortie, enceinte caractérisée en ce qu'au moins un compartiment parallépipèdique comporte également au moins une paroi intermédiaire (7) disposée dans le lit mobile, parallèlement aux autres grilles.

11. Enceinte selon l'une des revendications précédentes, caractérisée en ce que la paroi intermédiaire comprend 2 faces parallèles (30,31) perméables au fluide mais non perméables aux solides, séparées par un espace dans lequel est amené, par des moyens d'introduction (32), un fluide d'appoint.

12. Enceinte selon l'une des revendications précédentes, caractérisée en ce qu'elle comporte au moins une paroi (cloison) radiale divisant le lit en secteur(s).

13. Enceinte selon l'une des revendications précédentes, caractérisée en ce qu'elle est constituée d'un réacteur contenant un lit mobile de particules catalytiques.

14. Enceinte selon la revendication 13, caractérisé en ce qu'il s'agit d'un réacteur de réformage catalytique.

15. Utilisation d'une enceinte pour le reformage catalytique en lit mobile, enceinte délimitée par au moins une paroi (1), comportant :
. au moins une ouverture (12) pour l'introduction de particules granulaires solides, de même nature, ayant un diamètre moyen compris entre 0,1 et 6 mm,
. au moins une grille (3, 4) délimitant un lit mobile desdites particules qui circule dans l'enceinte dans une direction sensiblement parallèle à ladite grille;
. au moins une ouverture (14) pour l'introduction d'au moins un fluide qui circule dans ledit lit de particules dans une direction différente de celle de l'ensemble des particules et sort dudit lit par au moins une grille (4),
. au moins une ouverture (15) pour la sortie dudit fluide de l'enceinte,
. au moins une ouverture (13) pour la sortie desdites particules de l'enceinte,
. au moins une paroi (7) dite intermédiaire située dans le lit de particules, ladite paroi étant perméable au fluide mais non perméable aux particules granulaires solides, et disposée sensiblement dans le sens de l'écoulement des particules,
caractérisée en ce que la (les) paroi(s) intermédiaire(s) est située entre 0,1 et 0,75e, e étant l'épaisseur complète du lit, à partir de la grille par laquelle sort le fluide, ladite position étant calculée de façon à ce que le débit maximum de blocage, des particules contre les parois soit identique pour chacune des zones séparées, ladite paroi intermédiaire présentant un coefficient de frottement avec les particules comprises entre 0,1 et 0,7.

## Claims

1. An enclosure delimited by at least one wall (1), comprising :
- at least one opening (12) for the introduction of solid granular particles, of the same nature, having a mean diameter ranging between 0.1 and 6mm,
- at least one grille (3, 4) delimiting a moving bed of said particles which circulates in the enclosure in a direction substantially parallel to said grill,
- at least one opening (14) for the introduction of at least one fluid which circulates in said bed of particles in a different direction from that of the particles and issues from said bed by way of at least one grill (4),
- at least one opening (15) for the outlet of said fluid from the enclosure,
- at least one opening (13) for the outlet of said particles from the enclosure,
characterised in that it also comprises at least one wall (7) referred to as an intermediate wall and disposed in the bed of particles, said wall being permeable to the fluid but impermeable to the solid granular particles and disposed substantially in the direction of flow of the particles, situated at between 0.1 e and 0.75 e, e being the complete thickness of the bed, from the grill by way of which the fluid issues, in such a way that the maximum flow rate of blocking of the particles against the walls is identical for each of the separate zones, said intermediate wall having a coefficient of friction with the particles of between 0.1 and 0.7, and the upper part of said intermediate wall stops before the solid distribution zone and does not offer any obstacle to regular distribution of the solid particles between the two zones on respective sides of that wall.

2. An enclosure according to claim 1 characterised in that the bed circulates in the volume delimited by a grill and a wall of the enclosure.

3. An enclosure according to claim 1 characterised in that the bed circulated in the volume delimited between at least two grills (3,4)

4. An enclosure according to one of the preceding claims characterised in that the intermediate wall or walls (7) is or are formed by a grill.

5. An enclosure according to one of the preceding claims characterised in that the intermediate wall or walls (7) is situated at between one-third and two-thirds of the complete thickness of the bed, from the grill (4) by way of which the fluid issues.

6. An enclosure according to one of the preceding claims characterised in that the intermediate wall or walls (7) is or are parallel to at least one grill.

7. An enclosure according to one of the preceding claims comprising a cylindrical reactor having a cylindrical wall (1), a bottom (10) and a top (11), two grills (3, 4) which are concentric along the axis of the reactor and delimiting in the reactor a moving bed of solid particles, at least one opening (12) in the top (11) for introducing the solid particles and at least one opening (13) in the bottom for discharge thereof, at least one opening (14) in the upper part of the reactor for introduction of the fluid and at least one opening (15) in the lower part for discharge thereof, the fluid passing through the moving bed in a direction different from the flow of the assembly of the particles, the enclosure being characterised in that it also comprises at least one intermediate grill (7) disposed in the moving bed concentrically with the other grills.

8. An enclosure according to claim 7 characterised in that the opening or openings for the introduction and discharge of the fluid is or are arranged to cause the fluid to circulate from the annular space delimited by the wall (1) of the enclosure and the external grill (3) of larger diameter towards the internal volume delimited by the grill (4) of smaller diameter, from which it issues.

9. An enclosure according to claim 8 characterised in that the opening or openings for the introduction and discharge of the fluid are arranged to cause the fluid to circulate from the internal volume delimited by the grill (4) of smaller diameter towards the annular space delimited by the wall (1) of the enclosure and the external grill (3) of larger diameter.

10. An enclosure according to one of the preceding claims formed by a reactor comprising at least one parallelepipedic compartment (25) comprising two walls (26, 27), two parallel planar grills (3, 4) disposed between said two walls delimiting a moving bed of solid particles, and a space between each wall and grill, one for feeding the fluid into the compartment and the other for the discharge thereof, the enclosure being characterised in that at least one parallelepipedic compartment also comprises at least one intermediate wall (7) disposed in the moving bed parallel to the other grills.

11. An enclosure according to one of the preceding claims characterised in that the intermediate wall comprises two parallel faces (30, 31) which are permeable to the fluid but not permeable to the solids, being separated by a space into which a make-up fluid is fed by introduction means (32).

12. An enclosure according to one of the preceding claims characterised in that it comprises at least one radial wall (partition) dividing the bed into a sector or sectors.

13. An enclosure according to one of the preceding claims characterised in that it is formed by a reactor containing a moving bed of catalytic particles.

14. An enclosure according to claim 13 characterised in that it involves a catalytic reforming reactor.

15. Use of an enclosure for catalytic reforming in moving bed, enclosures delimited by at least one wall (1) comprising :
- at least one opening (12) for the introduction of solid granular particles, of the same nature, having a mean diameter ranging between 0.1 and 6 mm,
- at least one grill (3, 4) delimiting a moving bed of said particles which circulates in the enclosure in a direction substantially parallel to said grill,
- at least one opening (14) for the introduction of at least one fluid which circulates in said bed of particles in a different direction from that of the assembly of the particles and issues from said bed by way of at least one grill (4),
- at least one opening (15) for the outlet of said fluid from the enclosure,
- at least one opening (13) for the outlet of said particles from the enclosure,
- at least one wall (7) referred to as an intermediate wall and disposed in the bed of particles, said wall being permeable to the fluid bit impermeable to the solid granular particles and disposed substantially in the direction of flow of the particles,
characterised in that the intermediate wall (1) is situated at between 0.1 e and 0.75 e, e being the complete thickness of the bed, from the grill by way of which the fluid issues, in such a way that the maximum flow rate of blocking of the particles against the walls is identical for each of the separate zones, said intermediate wall having a coefficient of friction with the particles of between 0.1 and 0.7.

## Patentansprüche

1. Umschlossener Raum, begrenzt durch wenigstens eine Wand (1), umfassend
wenigstens eine Öffnung (12) zum Einführen fester granulatförmiger Partikel gleicher Art mit einem mittleren Durchmesser zwischen 0,1 und 6 mm,
wenigstens ein Gitter (3, 4) das ein bewegliches Bett dieser Partikel begrenzt, das in diesem umschlossenen Raum in einer Richtung im wesentlichen parallel zu diesem Gitter zirkuliert,
wenigstens eine Öffnung (14) zum Einführen wenigstens eines Fluids, das in diesem Partikelbett in einer Richtung unterschiedlich zu der der Gesamtheit der Partikel zirkuliert und aus diesem Bett über wenigstens ein Gitter (4) austritt,
wenigstens eine Öffnung (15) zum Austritt dieses Fluids aus dem umgrenzten Raum,
wenigstens eine Öffnung (13) zum Austritt dieser Partikel aus dem umgrenzten Raum,
dadurch gekennzeichnet, daß er ebenfalls wenigstens eine Wand (7), eine sogenannte Zwischenwand, die in diesem Partikelbett sich befindet, umfaßt, wobei die Wand permeabel für das Fluid, jedoch nicht permeabel für die granulatförmigen Festpartikel ist und im wesentlichen in Strömungsrichtung der Partikel zwischen 0,1e und 0,75e angeordnet ist, wobei e die vollständige Dicke des Bettes ausgehend vom Gitter, über das das Fluid austritt, ist, derart, daß die maximale Blockierungsmenge der Partikel gegen die Wandungen identisch für jede der getrennten Zonen ist und diese Zwischenwand einen Reibungskoeffizienten zu den Partikeln zwischen 0,1 und 0,7 hat, und dieser obere Teil dieser Zwischenwandung vor der Verteilerzone des Feststoffes aufhört und kein Hindernis für die regelmäßige Verteilung der zwischen den beiden Zonen auf beiden Seiten dieser Wandung angeordneten Feststoffpartikel bietet.

2. Umschlossener Raum nach Anspruch 1, dadurch gekennzeichnet, daß das Bett in dem durch ein Gitter und eine Wandung des umschlossenen Raumes begrenzten Volumen zirkuliert.

3. Umschlossener Raum nach Anspruch 1, dadurch gekennzeichnet, daß das Bett in dem zwischen wenigstens zwei Gittern (3, 4) begrenzten Volumen zirkuliert.

4. Umschlossener Raum nach einem der vorhergehenden Ansprüche, dadurch gekennzeichnet, daß die Zwischenwand/wände (7) durch ein Gitter gebildet ist/sind.

5. Umschlossener Raum nach einem der vorhergehenden Ansprüche, dadurch gekennzeichnet, daß die Zwischenwand/wände (7) zwischen 1/3 und 2/3 der vollständigen Dicke des Bettes ausgehend vom Gitter (4), über das das Fluid austritt, angeordnet ist.

6. Umschlossener Raum nach einem der vorhergehenden Ansprüche, dadurch gekennzeichnet, daß die Zwischenwand/wände (7) parallel zu wenigstens einem Gitter ist/sind.

7. Umschlossener Raum nach einem der vorhergehenden Ansprüche, bestehend aus einem zylindrischen Reaktor mit einer zylindrischen Wand (1), einem Boden (10) und einem Dach (11), zwei Gittern (3, 4), die konzentrisch gemäß der Achse des Reaktors sind und im Reaktor ein bewegliches Bett aus Feststoffpartikeln begrenzen, wenigstens eine Öffnung (12) in dem Dach zum Einführen der Feststoffpartikel und wenigstens eine Öffnung (13) im Boden für ihren Austritt, wenigstens eine Öffnung (14) am oberen Teil des Reaktors zum Einführen des Fluids und wenigstens eine Öffnung (15) im unteren Teil für dessen Austritt, wobei das Fluid das bewegliche Bett in einer Richtung unterschiedlich zur Strömungsrichtung der Gesamtheit der Partikel durchsetzt, dadurch gekennzeichnet, daß der umschlossene Raum ebenfalls wenigstens ein Zwischengitter (7) umfaßt, das in dem beweglichen Bett konzentrisch mit den anderen Gittern angeordnet ist.

8. Umschlossener Raum nach Anspruch 7, dadurch gekennzeichnet, daß die Öffnung/en zum Einführen und Herausführen des Fluids angeordnet ist/sind, um das Fluid aus dem durch die Wandung (1) des umschlossenen Raumes und dem äußeren Gitter (3) größeren Durchmessers begrenzten Ringraum zum durch das Gitter (4) kleineren Durchmessers begrenzten Volumen, aus dem es austritt, strömen zu lassen.

9. Umschlossener Raum nach Anspruch 8, dadurch gekennzeichnet, daß die Öffnung/en zum Einführen und Herausführen des Fluids angeordnet sind, um das Fluid aus dem Inneren vom Gitter (4) kleineren Durchmessers begrenzten Volumen zum Ringraum zirkulieren zu lassen, der durch die Wandung (1) des umschlossenen Raumes und dem äußeren Gitter (3) größeren Durchmessers begrenzt ist.

10. Umschlossener Raum nach einem der vorhergehenden Ansprüche, gebildet durch einen Reaktor, der wenigstens eine parallelepipedförmige Kammer (25), die zwei Wandungen (26, 27), zwei Plane-Gitter (3, 4), die parallel sind und zwischen diesen beiden ein bewegliches Bett aus festen Partikeln begrenzenden Wandungen umfaßt und einen Raum zwischen jeder Wandung und Gitter umfaßt, den einen zum Zuführen des Fluids in die Kammer, der andere für seinen Austritt, umschlossener Raum, dadurch gekennzeichnet, daß wenigstens eine parallelepipedförmige Kammer ebenfalls wenigstens eine Zwischenwand (7) umfaßt, die im beweglichen Bett parallel zu den anderen Gittern angeordnet ist.

11. Umschlossener Raum nach einem der vorhergehenden Ansprüche, dadurch gekennzeichnet, daß die Zwischenwand 2 parallele Flächen (30, 31) umfaßt, die permeabel für das Fluid, jedoch nicht permeabel für die Feststoffe sind, durch einen Raum getrennt sind, in den über Einführungseinrichtungen (32) ein Zusatzfluid eingeführt wird.

12. Umschlossener Raum nach einem der vorhergehenden Ansprüche, dadurch gekennzeichnet, daß er wenigstens eine Wandung (radiale Trennwand) umfaßt, die das Bett in Sektoren trennt.

13. Umschlossener Raum nach einem der vorhergehenden Ansprüche, dadurch gekennzeichnet, daß er aus einem Reaktor gebildet ist, der ein bewegliches Bett aus katalytischen Partikeln enthält.

14. Umschlossener Raum nach Anspruch 13, dadurch gekennzeichnet, daß es sich um einen katalytischen Reformierungsreaktor handelt.

15. Verwendung eines umschlossenen Raumes zur katalytischen Reformierung im beweglichen Bett, umschlossener Raum, der durch wenigstens eine Wandung (1) begrenzt ist, umfassend:
- wenigstens eine Öffnung (12) zum Einführen fester granulatförmiger Partikel gleicher Art mit einem mittleren Durchmesser zwischen 0,1 und 6 mm,
- wenigstens ein Gitter (3, 4) das ein bewegliches Bett dieser Partikel begrenzt, das in diesem umschlossenen Raum in einer Richtung im wesentlichen parallel zu diesem Gitter zirkuliert,
- wenigstens eine Öffnung (14) zum Einführen wenigstens eines Fluids, das in diesem Partikelbett in einer Richtung unterschiedlich zu der der Gesamtheit der Partikel zirkuliert und aus diesem Bett über wenigstens ein Gitter (4) austritt,
- wenigstens eine Öffnung (15) zum Austritt dieses Fluids aus dem umgrenzten Raum,
- wenigstens eine Öffnung (13) zum Austritt dieses Partikels aus dem umgrenzten Raum,
- wenigstens eine Wand (7), sogenannte Zwischenwand, die im Partikelbett angeordnet ist, wobei diese Wand permeabel für das Fluid, jedoch nicht permeabel für die festen granulatförmigen Partikel ist und im wesentlichen in Strömungsrichtung der Partikel angeordnet ist, dadurch gekennzeichnet, daß die Zwischenwand/wände zwischen 0,1 und 0,75e angeordnet ist/sind, wobei e die vollständige Dicke des Bettes ausgehend von dem Gitter, über welches das Fluid austritt, ist und diese Position derart berechnet ist, daß der maximale Blockierungsdurchsatz der Partikel gegen die Wandungen identisch für jede der getrennten Zonen ist, wobei diese Zwischenwand einen Reibungskoeffizienten mit den Partikeln zwischen 0,1 und 0,7 aufweist.
